# FASCICULE DE BREVET EUROPEEN

(11) **EP 3 118 378 B1**
(45) Date de publication et mention de la délivrance du brevet: **03.11.2021**
(21) Numéro de dépôt: 16178649.6
(22) Date de dépôt: 08.07.2016
(51) Int. Cl.: E02F 3/96, A01G 17/02, E02F 9/08

(54) **ENGIN DE TRAVAIL MOTORISE ET MOBILE**
MOTORISIERTE UND MOBILE ARBEITSMASCHINE
MOTORISED MOBLE WORKING MACHINE

(30) Priorité: 17.07.2015 FR 1556800
(43) Date de publication de la demande: 18.01.2017
(73) Titulaire: Sarl Maurice Vesselle, 51150 Bouzy (FR)
(72) Inventeur: VESSELLE, Thierry, 51150 BOUZY (FR); VESSELLE, Didier, 51150 BOUZY (FR)
(74) Mandataire: Cabinet Bleger-Rhein-Poupon

(56) Documents cités:
- EP-A2- 1 911 889
- BE-A4- 1 019 294
- FR-A1- 2 737 743
- US-A- 2 992 016
- US-A1- 2005 262 741

## Description

L'invention concerne le domaine des travaux agricoles. Elle concerne plus particulièrement un engin de travail motorisé et mobile équipé d'un bras porte-outil hydraulique, destiné à être utilisé dans un champ de cultures palissées telles que des vignes, et plus particulièrement comprenant un châssis de type enjambeur.

L'art antérieur nous enseigne qu'il existe déjà des tracteurs enjambeurs pour effectuer différentes tâches liées aux cultures comme la vigne. Ce type de tracteurs permet de rouler dans les routes de vignes, en enjambant la végétation.

L'art antérieur nous enseigne qu'il existe déjà des engins de type enjambeur, munis d'une pelle mécanique, destinés à la plantation et au remplacement de plants isolés en rangées de culture, tels que décrits dans FR 2737743.

Ce type d'engins enjambeurs répond à des besoins généraux mais manque de stabilité pendant les travaux. Ceci est dû au centre de gravité très haut de l'engin, l'engin pouvant dès lors se renverser facilement. En particulier, un centre de gravité très haut déstabilise l'engin au niveau de sa périphérie latérale lorsque celui-ci comporte un porte-outil disposé sur sa périphérie avant ou arrière et en hauteur. Plus le châssis de l'engin est à une grande hauteur, plus le risque de déséquilibre latéral est grand. Ce problème est d'autant plus présent quand les travaux doivent être effectués sur un terrain en pente, ce qui est très fréquent en viticulture, puisque la vigne est de préférence cultivée à flancs de coteaux. En d'autres termes, un terrain en dénivelé modifie le centre de gravité et accroît encore le risque de renversement de l'engin enjambeur.

La présente invention a donc pour objet de proposer de nouveaux moyens afin de répondre aux inconvénients de l'art antérieur, à savoir accroître la stabilité d'un engin notamment lorsqu'il doit travailler en dévers. Il s'agit plus particulièrement de proposer un engin de travail motorisé et mobile, équipé d'un bras porte-outil hydraulique, destiné à être utilisé dans un champ de cultures telles que des vignes, composé d'un châssis de type enjambeur, sur lequel sont fixés des moyens de roulement, caractérisé en ce que ledit châssis comprend au moins deux stabilisateurs télescopiques hydrauliques indépendants l'un de l'autre, chacun conçu apte à être déployé horizontalement et à venir prendre appui au sol au travers de moyens de pivotement autour d'un axe horizontal et sous l'action de moyens moteurs.

Selon une caractéristique additionnelle de l'engin selon l'invention, les moyens moteurs consistent en des moyens d'élongation et de rétraction des stabilisateurs.

Selon une autre caractéristique additionnelle de l'engin selon l'invention, l'axe de pivotement de chacun des stabilisateurs est horizontal et perpendiculaire à la direction de déplacement de l'engin.

Selon une autre caractéristique additionnelle de l'engin selon l'invention, chacun des stabilisateurs présente des moyens de pivotement autorisant également leur déplacement dans le sens transversal par rapport au sens de déplacement de l'engin.

Selon une autre caractéristique supplémentaire de l'invention, l'angle (8) de pivotement desdits stabilisateurs (5) est compris dans un angle d'intervalle de 90°.

Selon une autre caractéristique additionnelle de l'engin selon l'invention, le châssis est surélevé dans sa partie centrale d'une hauteur d'au moins 80 cm par rapport à la fixation des moyens de roulement.

Selon une autre caractéristique additionnelle de l'engin selon l'invention, les stabilisateurs sont équipés, chacun à leur extrémité libre, d'une lame orientée dans un plan sensiblement vertical et perpendiculaire à l'axe longitudinal principal du stabilisateur qui le porte.

De manière avantageuse, ladite lame (50) présente une base (51) élargie.

Avantageusement, l'engin selon l'invention comprend des moyens d'abaissement du centre de gravité.

Selon un mode de réalisation particulier de l'engin de l'invention, lesdits moyens de roulement (4) sont des chenilles (41) .

D'autres caractéristiques et avantages de la présente invention apparaîtront à la lecture de la description détaillée qui va suivre se rapportant à un exemple de réalisation donné à titre indicatif et non limitatif.

La compréhension de cette description sera facilitée en se référant aux dessins joints, dans lesquels :
- la figure 1 représente schématiquement un engin de travail selon l'invention ;
- la figure 2 représente schématiquement une vue partielle de l'engin de la figure 1;
- la figure 3 représente schématiquement une autre vue partielle de l'engin de la figure 1.

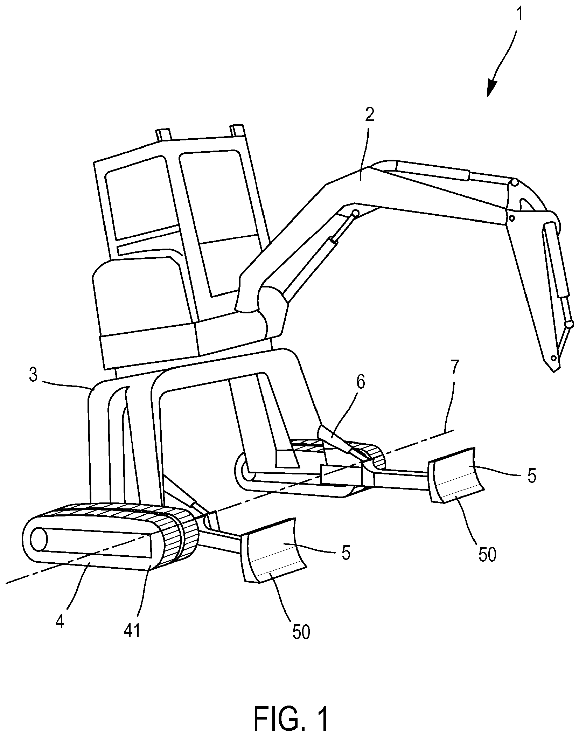

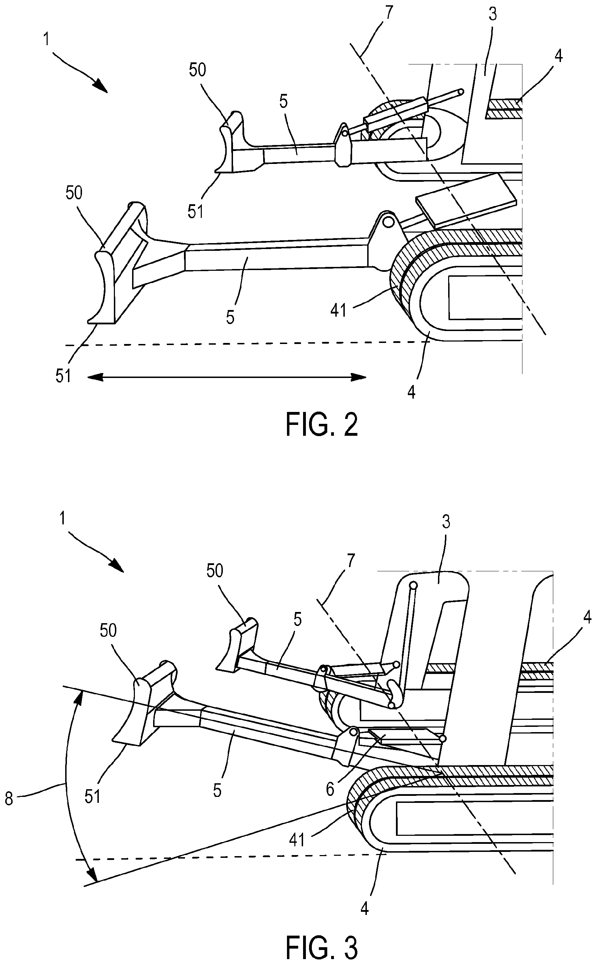

Ainsi et tel que visible sur les figures 1 à 3, la présente invention concerne tout d'abord un engin de travail 1 motorisé et mobile, équipé d'un bras porte-outil 2 hydraulique, destiné à être utilisé dans un champ de cultures telles que des vignes, composé d'un châssis 3 de type enjambeur, sur lequel sont fixés des moyens de roulement 4.

L'engin 1 est avant tout un engin agricole.

Un bras porte-outil 2 permet d'actionner un outil tel qu'une pelle mécanique, un godet, etc. Ledit bras porte-outil 2 de l'engin 1 de l'invention est avantageusement positionné sur la partie avant ou arrière de l'engin, plus spécifiquement de son châssis 3. L'axe avant-arrière de l'engin 1 étant parallèle à l'axe de déplacement dudit engin 1, notamment à son déplacement au sein dudit champ de culture. Ledit bras porte-outils 2 est donc susceptible, de par sa position, de déstabiliser l'équilibre dudit engin 1, notamment quand celui-ci est sur un terrain en pente.

Ledit châssis 3 de type enjambeur permet à l'engin 1 de passer au-dessus d'un rang de culture telle qu'une rangée de vigne.

Cet engin 1 est caractérisé en ce que ledit châssis 3 comprend au moins deux stabilisateurs 5 télescopiques hydrauliques indépendants les uns des autres, chacun conçu apte à être déployé horizontalement et à venir prendre appui au sol au travers de moyens de pivotement 6 autour d'un axe 7 horizontal et sous l'action de moyens moteurs.

Les stabilisateurs 5 sont des moyens permettant de stabiliser l'engin 1 sur le sol pendant un travail agricole particulier. Ainsi, bien que son centre de gravité soit situé plus en hauteur qu'un engin de travail standard, les stabilisateurs 5 préviennent le basculement de l'engin 1 au cours d'un travail sur un sol horizontal ou non.

Avantageusement, lesdits stabilisateurs 5 comprennent des moyens moteurs d'élongation et de rétraction.

Cette spécificité permet d'adapter la stabilisation de l'engin 1 pendant un travail. Le conducteur peut donc modifier les paramètres de longueur de chaque stabilisateur télescopique 5 selon une situation précise, de façon aisée.

Préférentiellement, l'axe de pivotement 7 desdits stabilisateurs 5 est perpendiculaire à la direction de déplacement de l'engin 1.

Suivant la nature du terrain, les stabilisateurs 5 peuvent être abaissés ou élevés.

Selon l'invention, l'axe de pivotement 7 desdits stabilisateurs 5 est situé au plus près dudit châssis de sorte que l'élévation ou l'abaissement des stabilisateurs 5, plus précisément le pivotement se réalise à proximité du châssis 3. Ainsi, l'articulation desdits stabilisateurs 5 au niveau du rattachement audit châssis 3 facilite le mécanisme d'élévation et d'abaissement des stabilisateurs 5. Ceci présente l'avantage de stabiliser encore l'équilibre de l'engin 1 sur le terrain agricole.

Un axe de pivotement 7 perpendiculaire facilite la stabilisation dans la direction de déplacement de l'engin 1.

Selon un mode particulier de réalisation de l'invention, chacun des stabilisateurs 5 présente des moyens de pivotement autorisant un déplacement dans le sens transversal, par rapport au sens de déplacement de l'engin 1.

Cette configuration particulière permet de s'adapter à un sol non horizontal dont la pente n'est pas parallèle au déplacement de l'engin 1.

Cette configuration autorisant un déplacement transversal des stabilisateurs 5 permet de les écarter ou de les rapprocher les uns des autres sur un même plan horizontal. Ainsi, selon les caractéristiques du terrain, plus particulièrement selon l'espace entre deux rangs de culture successifs, il est possible d'ajuster et de modifier l'écartement existant entre deux stabilisateurs 5, c'est-à-dire de modifier leur position.

De façon avantageuse, l'angle 8 de pivotement desdits stabilisateurs 5 est compris dans un angle d'intervalle de 90°.

Cette fenêtre d'angle de 90° permet une grande latitude de mouvement des stabilisateurs 8.

Ainsi, les stabilisateurs 5 peuvent à la fois s'écarter ou se rapprocher l'un de l'autre, et, s'élever et s'abaisser verticalement par rapport au sol. De cette manière, la position des stabilisateurs 5 peut être adaptée parfaitement à la configuration du terrain de manière à avoir un centre de gravité même haut adéquat pour stabiliser l'engin 1 au sol.

L'engin 1 peut ainsi s'adapter à toutes les situations de terrain.

De façon avantageuse, ledit châssis 3 est surélevé dans sa partie centrale d'une hauteur d'au moins 80 cm par rapport à la fixation des moyens de roulement 4.

La hauteur des cultures, en particulier des vignes, est supérieure à 80 cm. Le châssis doit être en mesure de passer au-dessus sans les endommager.

De façon préférentielle, lesdits stabilisateurs sont équipés en leur extrémité libre d'une lame 50 orientée dans un plan sensiblement vertical et perpendiculaire à la direction de déplacement dudit engin 1.

Ces lames 50 permettent d'augmenter la surface de contact au sol des stabilisateurs 5. Le fait qu'elles soient perpendiculaires à la direction de déplacement de l'engin 1 augmente encore la stabilité de l'engin 1.

En outre, ces lames 50 ont pour avantage de pouvoir pénétrer dans la profondeur du terrain où se trouve l'engin 1 de l'invention. La capacité desdites lames 50 à pénétrer en partie dans le terrain augmente encore la stabilisation de l'engin 1 qui sera ancré en partie dans le terrain.

Selon un autre mode particulier de réalisation, ladite lame 50 présente une base 51 élargie.

La base 51 élargie de la lame 50 ajoute un facteur de stabilisation supplémentaire à l'engin 1.

Selon encore un autre mode de réalisation, l'engin 1 de travail comprend des moyens d'abaissement du centre de gravité.

Le centre de gravité de l'engin 1 est plus haut que celui d'un engin standard, toute proportion gardée. Le fait d'ajouter des moyens pour abaisser ce centre participe en la stabilisation de l'engin 1. Ces moyens d'abaissement du centre de gravité peuvent être par exemple des masses insérées dans la partie basse du châssis, par exemple juste au-dessus des moyens de roulement.

Selon un mode de réalisation préféré, lesdits moyens de roulement sont des chenilles 41.

Les chenilles 41 permettent à l'engin 1 de se déplacer facilement sur un terrain meuble. Mais des roues peuvent aussi être utilisées en tant que moyens de roulement pour faciliter le déplacement sur un terrain relativement dur.

## Revendications

1. Engin (1) de travail motorisé et mobile, équipé d'un bras (2) porte-outil hydraulique, destiné à être utilisé dans un champ de cultures telles que des vignes, composé d'un châssis (3) enjambeur, sur lequel sont fixés des moyens de roulement (4), **caractérisé en ce que** ledit châssis (3) comprend au moins deux stabilisateurs (5) télescopiques hydrauliques indépendants les uns des autres, chacun conçu apte à être déployé horizontalement et à venir prendre appui au sol au travers de moyens de pivotement (6) autour d'un axe horizontal (7) et sous l'action de moyens moteurs.

2. Engin (1) de travail selon la revendication précédente, **caractérisé en ce que** les moyens moteurs consistent en des moyens d'élongation et de rétraction des stabilisateurs.

3. Engin (1) de travail selon l'une quelconque des revendications précédentes, **caractérisé en ce que** l'axe de pivotement (7) de chacun des stabilisateurs (5) est horizontal et perpendiculaire à la direction de déplacement de l'engin (1).

4. Engin (1) de travail selon l'une quelconque des revendications précédentes, **caractérisé en ce que** chacun des stabilisateurs (5) présente des moyens de pivotement autorisant également leur déplacement dans le sens transversal par rapport au sens de déplacement de l'engin (1).

5. Engin (1) de travail selon l'une quelconque des revendications précédentes, **caractérisé en ce que** l'angle (8) de pivotement desdits stabilisateurs (5) est compris dans un angle d'intervalle de 90°.

6. Engin (1) de travail selon l'une quelconque des revendications précédentes, **caractérisé en ce que** ledit châssis (3) est surélevé dans sa partie centrale d'une hauteur d'au moins 80 cm par rapport à la fixation des moyens de roulement (4) .

7. Engin (1) de travail selon l'une quelconque des revendications précédentes, **caractérisé en ce que** lesdits stabilisateurs (5) sont équipés chacun à leur extrémité libre d'une lame (50) orientée dans un plan sensiblement vertical et perpendiculaire à l'axe longitudinal principal du stabilisateur (5) .

8. Engin (1) de travail selon la revendication précédente, **caractérisé en ce que** ladite lame (50) présente une base (51) élargie.

9. Engin (1) de travail selon l'une quelconque des revendications précédentes, **caractérisé en ce qu'**il comprend des moyens d'abaissement du centre de gravité.

10. Engin (1) de travail selon l'une quelconque des revendications précédentes, **caractérisé en ce que** lesdits moyens de roulement (4) sont des chenilles (41).

## Patentansprüche

1. Motorisierte und bewegliche Arbeitsmaschine (1), die mit einem hydraulischen Werkzeugträgerarm (2) ausgestattet ist, die dazu bestimmt ist, auf einem Feld für Kulturen, wie z. B. Weinreben, eingesetzt zu werden, und die aus einem Spreizrahmen (3) besteht, an dem Rollmittel (4) befestigt sind, **dadurch gekennzeichnet, dass** der Rahmen (3) mindestens zwei voneinander unabhängige hydraulische Teleskopstabilisatoren (5) umfasst, die jeweils dazu bestimmt sind, horizontal ausgefahren zu werden und sich mit Hilfe von Schwenkmitteln (6) um eine horizontale Achse (7) und unter der Wirkung von Antriebsmitteln auf dem Boden abzustützen.

2. Arbeitsmaschine (1) nach dem vorhergehenden Anspruch, **dadurch gekennzeichnet, dass** die Antriebsmittel aus Mitteln zum Ausfahren und Einfahren der Stabilisatoren bestehen.

3. Arbeitsmaschine (1) nach einem der vorhergehenden Ansprüche, **dadurch gekennzeichnet, dass** die Schwenkachse (7) jedes der Stabilisatoren (5) horizontal und senkrecht zur Bewegungsrichtung der Maschine (1) ist.

4. Arbeitsmaschine (1) nach einem der vorhergehenden Ansprüche, **dadurch gekennzeichnet, dass** jeder der Stabilisatoren (5) Schwenkmittel aufweist, die es erlauben, sie auch in Querrichtung zur Bewegungsrichtung der Maschine (1) zu bewegen.

5. Arbeitsmaschine (1) nach einem der vorhergehenden Ansprüche, **dadurch gekennzeichnet, dass** der Schwenkwinkel (8) der Stabilisatoren (5) innerhalb eines Intervallwinkels von 90° liegt.

6. Arbeitsmaschine (1) nach einem der vorhergehenden Ansprüche, **dadurch gekennzeichnet, dass** der Rahmen (3) in seinem mittleren Teil um eine Höhe von mindestens 80 cm in Bezug auf die Befestigung der Rollmittel (4) erhöht ist.

7. Arbeitsmaschine (1) nach einem der vorhergehenden Ansprüche, **dadurch gekennzeichnet, dass** die Stabilisatoren (5) jeweils an ihrem freien Ende mit einer Klinge (50) ausgestattet sind, die in einer im Wesentlichen vertikalen Ebene und senkrecht zur Hauptlängsachse des Stabilisators (5) ausgerichtet ist.

8. Arbeitsmaschine (1) nach dem vorhergehenden Anspruch, **dadurch gekennzeichnet, dass** die Klinge (50) eine verbreiterte Basis (51) aufweist.

9. Arbeitsmaschine (1) nach einem der vorhergehenden Ansprüche, **dadurch gekennzeichnet, dass** sie Mittel zum Absenken des Schwerpunkts umfasst.

10. Arbeitsmaschine (1) nach einem der vorhergehenden Ansprüche, **dadurch gekennzeichnet, dass** die Rollmittel (4) Raupen (41) sind.

## Claims

1. A motorized and mobile work vehicle (1), equipped with a hydraulic tool holder arm (2), intended for use in a field of crops such as vines, composed of a straddle chassis (3) on which rolling means (4) are fixed, **characterized in that** said chassis (3) comprises at least two hydraulic telescopic stabilizers (5) which are independent of one another and are each designed to be deployed horizontally and to come to rest on the ground through pivot means (6) about a horizontal axis (7) and under the action of motor means.

2. The work vehicle (1) according to the preceding claim, **characterized in that** the motor means consist of means for extending and retracting the stabilizers.

3. The work vehicle (1) according to any of the preceding claims, **characterized in that** the pivot axis (7) of each of the stabilizers (5) is horizontal and perpendicular to the direction of movement of the vehicle (1).

4. The work vehicle (1) according to any of the preceding claims, **characterized in that** each of the stabilizers (5) has pivot means also allowing their movement in the transverse direction with respect to the direction of movement of the vehicle (1).

5. The work vehicle (1) according to any of the preceding claims, **characterized in that** the pivot angle (8) of said stabilizers (5) is included in an interval angle of 90°.

6. The work vehicle (1) according to any of the preceding claims, **characterized in that** said chassis (3) is raised in its central part by a height of at least 80 cm relative to the attachment of the rolling means (4).

7. The work vehicle (1) according to any of the preceding claims, **characterized in that** said stabilizers (5) are each equipped at their free end with a blade (50) which is oriented in a substantially vertical plane and perpendicular to the main longitudinal axis of the stabilizer (5).

8. The work vehicle (1) according to the preceding claim, **characterized in that** said blade (50) has an enlarged base (51).

9. The work vehicle (1) according to any of the preceding claims, **characterized in that** it comprises means for lowering the center of gravity.

10. The work vehicle (1) according to any of the preceding claims, **characterized in that** said rolling means (4) are caterpillar tracks (41).
